Europäisches Patentamt

**European Patent Office**

Office européen des brevets

(11) Publication number: **0 025 788**
**B1**

## EUROPEAN PATENT SPECIFICATION

(45) Date of publication of patent specification: **29.12.82**

(21) Application number: **80900512.7**

(22) Date of filing: **11.03.80**

(86) International application number:
**PCT/SE80/00071**

(87) International publication number:
**WO 80/01920 18.09.80 Gazette 80/21**

(51) Int. Cl.³: **C 09 J 7/02, A 47 G 9/02,
A 47 C 31/10, B 32 B 7/06**

(54) Protective cover with non-permanent adhesion to a substrate.

(30) Priority: **12.03.79 SE 7902216**

(43) Date of publication of application:
**01.04.81 Bulletin 81/13**

(45) Publication of the grant of the patent:
**29.12.82 Bulletin 82/52**

(84) Designated Contracting States:
**FR**

(56) References cited:
**GB - A - 1 249 227**
**SE - A - 7 705 956**
**US - A - 3 635 523**
**US - A - 4 067 337**
**US - A - 4 097 943**

(73) Proprietor: **Möller, Bertil**
**Karlavägen 83 V**
**S-113 59 Stockholm (SE)**

(72) Inventor: **Möller, Bertil**
**Karlavägen 83 V**
**S-113 59 Stockholm (SE)**

(74) Representative: **Hermansson, Olof**
**AB Dahls Patentbyra Sturegatan 4**
**S-114 35 Stockholm (SE)**

Courier Press, Leamington Spa, England.

Protective cover with non-permanent adhesion to a substrate

This invention is in respect of a disposable protective cover, produced from a laminate product consisting of an exterior layer and a pressure sealing adhesive to stick the layer to a substrate, and suited for being used as a protection against dirtying, tearing, chilliness, heat etc.

As an example of protective covers for which the invention is applicable to advantage, may be mentioned disposable bed-sheets and pillowcases, headrest and armchair covers for airplane, bus and train seats, as well as small table cloths, bedside carpets, and the like. A disposable protective cover provided with a pressure sealing adhesive to stick the cover to a substrate so as to be held in place, is known to the art in the form of a disposable headrest cover as described in US—A—3 635 523. This headrest cover consists of a pliant sheet, which is, in on a part of the upper portion of its back surface, provided with a pressure sealing adhesive to removably stick the cover to the upholstery of a chair, the pliant sheet freely hanging down from the upper portion to project the upholstery.

The aim of the present invention is to create a disposable protective cover which, after having been applied to a substrate and irrespective of the size of the cover or the orientation of the substrate surface to be covered, is effectively held in place on the substrate to be covered.

To this end, the disposable protective cover according to the invention, which is thus of the kind having an exterior layer being the protective surface proper of the cover and, attached thereto, a pressure sealing adhesive to removably stick the exterior layer to a substrate, is characterized by the fact, that a net is attached by an adhesive to the inner surface of the exterior layer, that the net on its side facing away from the exterior layer carries the said pressure sealing adhesive to stick the exterior layer to a substrate, and that the cover is folded with the net inside.

Advantages of protective covers according to the invention, as compared with products hitherto used for corresponding purposes, are that they are easily attached where to be used and that they are effectively held in place, owing to adhesion at such locations of the substrate which are likely to be exposed to tearing forces, an adhesion which is substantially uniformly distributed over the entire surface of such locations. Hence, the cover is not squashed up, as is often the case with hitherto conventional "disposable bed-sheets" and similar covers, rapidly resulting in the material being torn asunder. In spite of the fact that the specific adhering force, calculated in $g/cm^2$ cloth surface, for instance, is rather low, a protective cloth, attached as disposable bed-sheet on a mattress, as a pillow-cover on a cushion, as a head rest or arm cover on a chair, for instance, after having been mildly pressed onto the substrate will remain steady on the substrate. Thus, a protective cover according to the invention is not only very easily attached as desired, but as well very easily removed from the substrate without damaging it, as is often the case when attaching, for instance, a protective foil coated by a uniform layer of "pressure-sensitive adhesive".

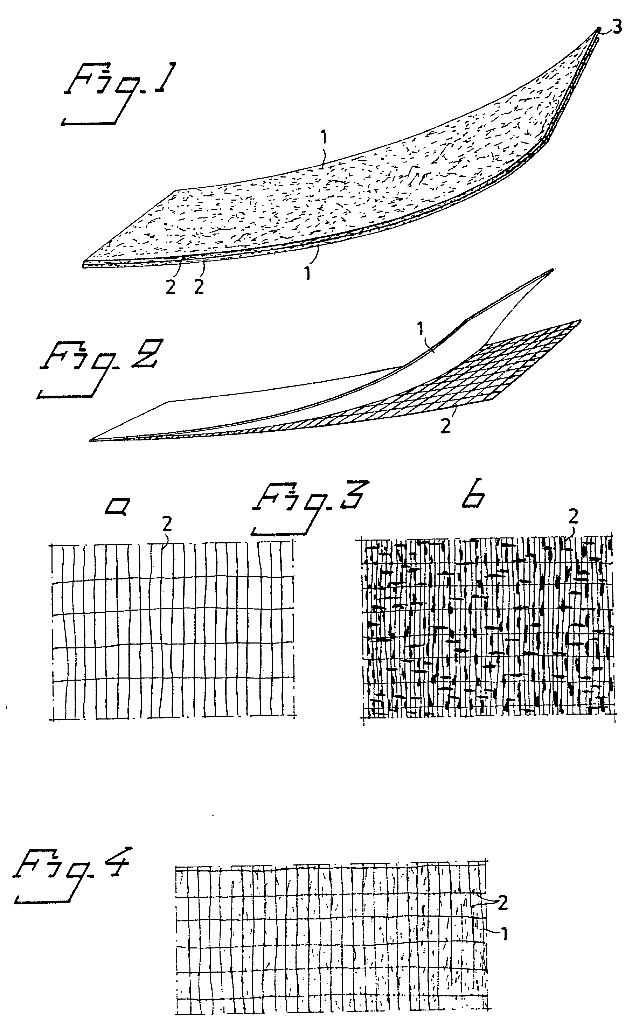

The invention is more closely described with reference to the accompanying drawings, in which Fig. 1 illustrates a laminate product used for producing the protective cover according to the invention.

Fig. 2 shows the show-side of the protective cover, consisting of a tissue web, and the adhesive-coated net, which in the final product is attached to said show-side.

Fig. 3 is a view of an embodiment of the net,

Fig. 4 is a view of the laminate product as seen from the net-face thereof and adhering to a non-woven tissue web,

Fig. 5 illustrates the arrangement of a protective cloth according to the invention to be attached to a substrate,

Fig. 6 illustrates the use of protective covers according to the invention on an arm-chair intended for common use,

Figs. 7—9 illustrate the use of protective covers as bed-sheets and pillow covers, respectively.

Fig. 1 diagramatically shows a doubled-up protective cover according to the invention, having, for instance, dimensions to make it suited as headrest on an armchair. The protective cover consists of an exterior layer 1, which may be a plastic sheeting, e.g. on ethene, vinyl or styrene basis, gauze paper (tissue), non-woven or other textile materials, a non-woven, comparatively thin web being, as a rule, most suited with respect to cost and surface characteristics. An underneath side layer 2 of the laminate, which in the protective cover shown doubled-up in fig. 1, is lying doubled between the two halves of the external layer and consists of a fine-mesh net, which, at least on the side facing the exterior layer 1 is coated with an intermediate coating of self-adhering adhesive, to which, as the case may be, a small quantity of adhesive absorbing powder may have been added, so as for instance various kinds of starch.

Depending on the type of intended adhesion, which, obviously, is also depending on the type of adhesive used, it may be suitable, when laminating the product, to coat only the side of the net facing the web with adhesive or to cover both sides of the net with adhesive. In the latter case the side of the net facing the web is not necessarily coated with a self-adhering adhesive and, with some types of adhesive, it may be suitable to have an adhesive between the net and the web which is not self-sticking. For obvious reasons such adhesive should be flexible in its binding state as well.

The mesh size of the net has no specific limits upwards and downwards. By obvious reasons it is selected with respect to the dimensions of a protective cloth intended to be used for a specific purpose, as well as to the forces to which the cloth is likely to be exposed. The net constitutes a carrier of the pressure-sealing adhesive intended to adhere to the substrate, and which will come into contact with the substrate along web-threads and, in particular, at junctions of the net. Additionally, it may be of advantage for some intended use and substrates to spotwise apply portions of adhesive distributed over the net surface or arranged in a row at a distance from each other, such portions as well covering free surface portions of the web in the meshes of the web.

Figs. 3a and b illustrate two embodiments of nets which have appeared to be particularly suitable to be used for protective cover according to the invention. Said cloths are constituted by carrier fibres of polyamide with a surface coating of polypropene and are known, for instance, as two-side-coated reinforcing liner in towels, bed-sheets, table cloths and the like, and is commercially available under the trade mark Scrinyl® (Société Béghin-Say).

Applying the adhesive to the net before the net, together with the web, is drawn between pressrollers may be executed by means of spraying as well as by means of one or two adhesive applying rollers, the latter being preferable when the side of the net facing the web only is to be coated with adhesive in such quantity that the net adheres to the web satistactorily, while a more restricted quantity of glue is to be present on the side of the net facing away from the web, in order to present a desired adhesive action.

In order to facilitate, when the protective cover is to be used, the separation of the faces of the net sticking together in the ready-made protective cover there is a possibility, when producing the laminate of which the protective cover is being prepared, to have the web extending outwardly of the edges of the net, so that such protions, when doubling up the laminate to constitute a protective cover, are being arranged so that adhesion between portions of the doubled-up product is not present at such portions. This procedure is to be preferred when producing a laminate intended for, for instance, bed-sheets, for which it is only necessary that they should adhere to the substrate, a mattress, along a central portion thereof. In smaller products for other purposes of the kind referred to above, the laminate is first doubled-up along one or more edges, so that, at such edges, net adheres to net to form a free margin 3 after doubling-up the rest of the

protective cover to form the ready-made protective cover.

Fig. 4 shows part of an embodiment of a laminate product with its adhesive-coated net 2 adhering to an, as used, external layer 1 consisting of non-woven tissue.

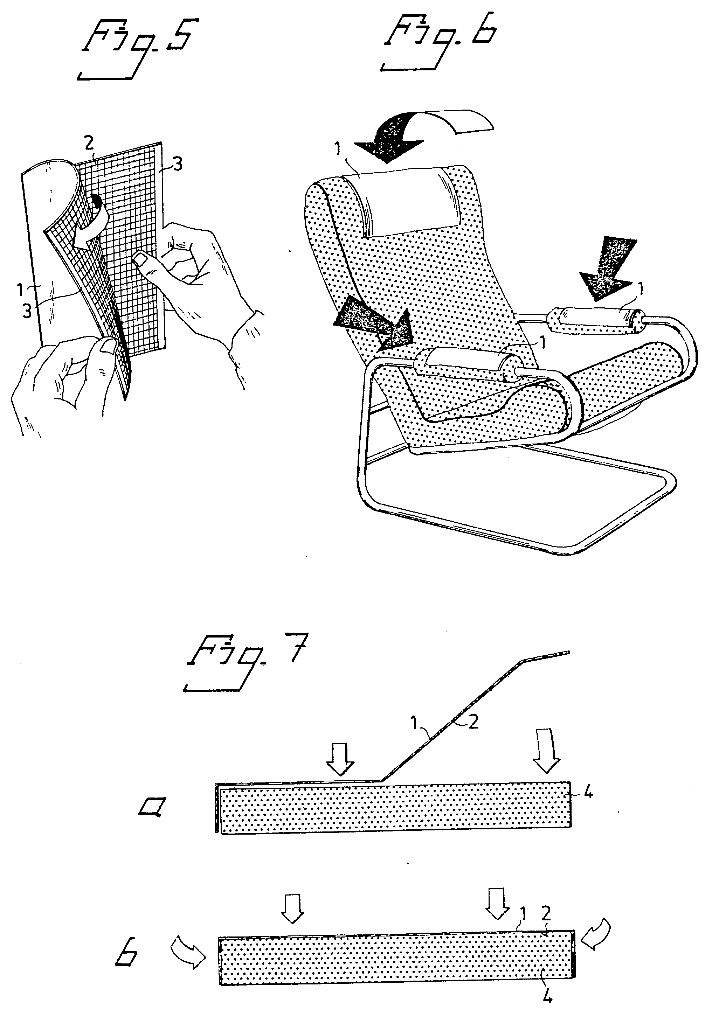

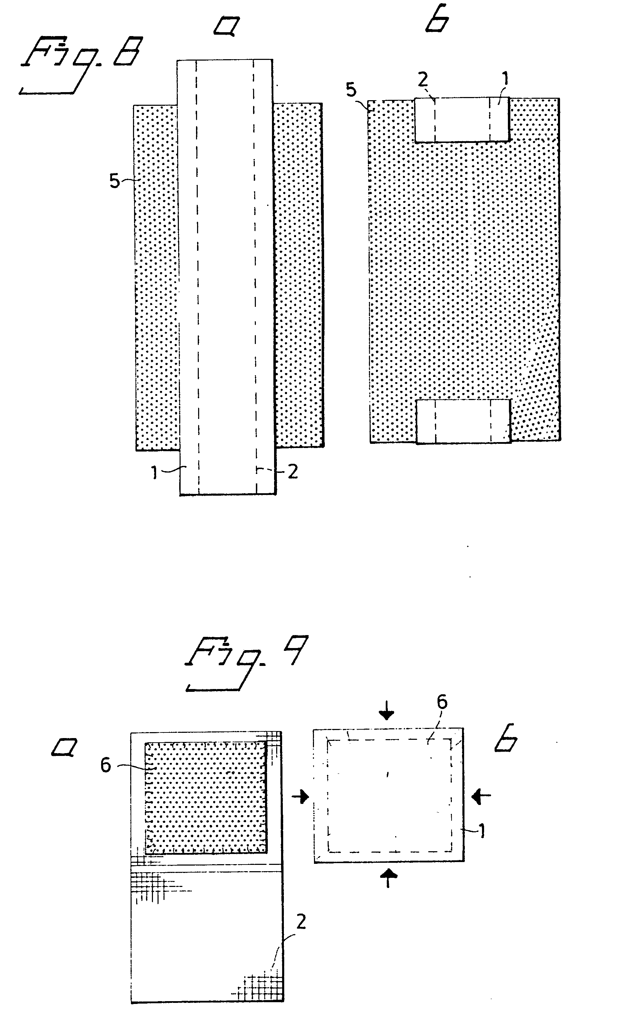

Fig. 5 illustrates an embodiment of protective cover, which is, before use, doubled up with its then inwardly facing halves of the adhesive-coated net 2 separably adhering to each other. Margins 3 of the faces of the cloth adhering to each other, are non-adhering to facilitate folding up the cloth as illustrated to be used, for instance, as illustrated by Fig. 6.

Figs. 7 a and b illustrate the use of a protective cover as disposable bed-sheet, attached to a mattress 4, Figs 8 a and b as disposable bed-sheet, attached to a rug 5, and Figs 9 a and b as pillow-case, arranged around a pillow 6.

## Claims

1. A disposable protective cover consisting of an exterior layer and a pressure sealing adhesive to stick the layer to a substrate, characterized in that a net (2) is attached by an adhesive to the inner surface of the exterior layer (1), that the net (2) on its side facing away from the exterior layer (1) carries the said pressure sealing adhesive to stick the exterior layer to a substrate and that the cover is folded with the net inside.

2. A cover according to claim 1, in which edges of the exterior layer (1) extend beyond edges of the net (2) to form a non-adhering margin (3) of the folded cover to facilitate its folding-up.

3. A cover according to claim 1 or claim 2, in which exclusively said adhesive carried by the net (2) on its side facing away from the exterior layer (1) consists of a pressure sealing adhesive, the adhesive by which the net (2) is attached to the exterior layer being a non-self-sticking adhesive.

## Revendications

1. Une enveloppe protectrice à usage unique comprenant une couche extérieure et un auto-adhésif pour coller la couche à un élément porteur, caractériseé en ce qu'un filet (2) est fixé par un adhésif à la face intérieure de la couche extérieure (1), que le filet (2) porte sur sa face orientée au sens opposé à la couche extérieure (1), ledit auto-adhésif pour coller la couche extérieure à un élément porteur, et que l'enveloppe est repliée avec le filet en dedans.

2. Une enveloppe selon la revendication 1, dans laquelle des bords de la couche extérieure (1) s'étendent au délà des bords du filet (2) pour former une marge non-adhérante (3) de l'enveloppe repliée pour faciliter son dépliement.

3. Une enveloppe selon la revendication 1 ou 2, dans laquelle exclusivement ledit adhésif porté par le filet (2) sur sa face orientée au sens opposé à la couche extérieure (1), est un auto-adhésif, l'adhésif fixant le filet (2) à la couche extérieure étant un adhésif non-autocollant.

**Patentansprüche**

1. Ein Einweg-Schutztuch bestehend aus einer Aussenschicht und einem selbstklebenden Heftmittel zum Aufkleben der Schicht auf eine Unterlage, dadurch gekennzeichnet, dass ein Netz (2) durch einen Klebestoff an der Innenfläche der Aussenschicht (1) befestigt ist, dass das Netz (2) auf seiner der Aussenschicht abgewendeten Seite das vorgenannte selbstklebende Heftmittel trägt, zwecks Kleben der Aussenschicht an eine Unterlage, und dass das Tuch mit dem Netz nach innen zussammengefaltet wird.

2. Ein Tuch nach Anspruch 1, wobei die Kanten der Aussenschicht (1) über die Kanten des Netzes (2) hervorragen um einen nichtheftenden Rand (3) de gefalteten Tuchs zu bilden und dadurch das Auseinanderfalten desselben zur erleichtenn.

3. Ein Tuch nach Anspruch 1 oder Anspruch 2, wobei ausschliesslich der genannte, auf der der Aussenschicht abgewendeten Seite des Netzes (2) vorhandene Klebestoff aus einem selbstklebenden Heftmittel besteht, mit welchem das Netz (2) an die Aussenschicht befestigt ist, ein nicht selbstklebendes Heftmittel ist.

0 025 788

**Fig. 1**

**Fig. 2**

**Fig. 3**

a          b

**Fig. 4**

Fig.5

Fig.6

Fig.7

a

b

Fig. 8

Fig. 9